# EUROPÄISCHE PATENTSCHRIFT

(11) **EP 4 078 763 B1**
(45) Veröffentlichungstag und Bekanntmachung des Hinweises auf die Patenterteilung: **19.03.2025**
(21) Anmeldenummer: 20821121.9
(22) Anmeldetag: 02.12.2020
(51) Int. Cl.: H02J 7/00

(54) **VERWENDUNG EINES STRAHLERS UND SYSTEM MIT ENERGIESPEICHER UND STRAHLER**
USE OF AN EMITTER AND SYSTEM COMPRISING AN ENERGY STORE AND AN EMITTER
UTILISATION D'UN ÉMETTEUR ET SYSTÈME COMPRENANT UN ACCUMULATEUR D'ÉNERGIE ET UN ÉMETTEUR

(30) Priorität: 20.12.2019 DE 102019008925
(43) Veröffentlichungstag der Anmeldung: 26.10.2022
(73) Patentinhaber: SEW-EURODRIVE GmbH & Co. KG, 76646 Bruchsal (DE)
(72) Erfinder: ILLERHAUS, Edmund, 88368 Bergatreute (DE); BREYER, Armin, 88145 Hergatz (DE)
(86) Internationale Anmeldenummer: PCT/EP2020/025556
(87) Internationale Veröffentlichungsnummer: WO 2021/121653

(56) Entgegenhaltungen:
- EP-A1- 1 548 207
- EP-B1- 1 548 207
- CH-A5- 586 498
- DE-A1- 102015 103 352
- DE-A1- 102018 000 043
- US-A- 3 860 853

## Beschreibung

Die Erfindung betrifft **ein System mit Energiespeicher und Strahler.**

Es ist allgemein bekannt, dass hohe Spannungen eine Gefahr darstellen und somit vor Ausführung von Wartungs- oder Service-Arbeiten geladene Bauteile, insbesondere Kondensatoren, entladen werden müssen.

**Aus der** DE 10 2015 103352 A1 **ist als nächstliegender Stand der Technik ein Verfahren zur Stabilisierung der Netzfrequenz in einem Spannungsnetz und Infrarotstrahler bekannt.**

**Aus der** EP 1 548 207 A1 **ist ein Kraftfahrzeug-Stellplatz bekannt.**

**Aus der** DE 10 2018 000 043 A1 **ist ein elektrisches Heizsystem bekannt.**

**Aus der** CH 586 498 A5 **ist eine Blitzröhrenschaltungsanordnung bekannt.**

Der Erfindung liegt daher die Aufgabe zugrunde, eine schnelle Entladung bei einem System mit Energiespeicher und Strahler zu erreichen.

Erfindungsgemäß wird die Aufgabe bei dem System mit Energiespeicher und Strahler nach den in Anspruch 1 angegebenen Merkmalen gelöst.

Wichtige Merkmale der Erfindung bei dem System mit Energiespeicher und Strahler sind, dass der Energiespeicher mit dem Strahler elektrisch lösbar, insbesondere mittels Steckverbindung oder Klemmverbindung, verbunden ist und den Strahler elektrisch speist.

Von Vorteil ist dabei, dass mittels des Strahlers eines sehr schnelle Entladung erreichbar ist. Denn der Strahler führt im Vergleich zu einem bekannten Bremswiderstand eine viel größere Leistung an die Umgebung ab, insbesondere, wenn gleichgroßes Bauvolumen für Strahler und Bremswiderstand vorgegeben werden. Außerdem wird die vom Strahler im Infraroten Frequenzbereich abgestrahlte Leistung anders verteilt als die vom Bremswiderstand abgegebene Wärme.

Bei einer vorteilhaften Ausgestaltung ist der Strahler ein IR-Strahler, insbesondere also Infrarotstrahler. Von Vorteil ist dabei, dass die abgestrahlte Leistung mittels eines den Strahler teilweise umgebenden metallischen Spiegels in eine Vorzugsrichtung abstrahlbar ist, so dass nur in der gewünschten Raumrichtung Wärmestrahlung abgegeben wird. Diese Raumrichtung ist in der Anlage derart gewählt, dass Gefahren, wie beispielswiese unzulässiges Erhitzen von Benzinkanistern oder Signalelektronik, vermieden wird.

Bei einer vorteilhaften Ausgestaltung weist der Energiespeicher einen Doppelschichtkondensator auf oder ist als Doppelschichtkondensatoranordnung ausgeführt. Von Vorteil ist dabei, dass eine schnelle Entladung ermöglicht ist, da der Energiespeicher hohe Ladeströme und hohe Entladeströme erträgt. Dies gilt insbesondere im Vergleich zu einem Akkumulator oder insbesondere im Vergleich zu einer Bleibatterie.

Bei einer vorteilhaften Ausgestaltung weist der Strahler einen in einer mit Schutzgas, insbesondere einem Halogen, befüllten Röhre angeordneten Draht auf,

insbesondere wobei der Draht mit einem Strom, insbesondere mit einem wesentlichen Anteil des vom Energiespeichers gelieferten Stroms, beaufschlagt ist, insbesondere wird. Von Vorteil ist dabei, dass infolge des Schutzgases auch beim Glühen des Drahtes keine chemische Reaktion, insbesondere keine Oxidation des Drahtes, bewirkt wird. Somit ist der Draht sehr hohen Temperaturen aussetzbar, was den Strahlungsanteil der vom Draht abgegebenen Energie stark erhöht und wodurch entsprechend hohe Ströme zulässig sind, die eine entsprechend schnelle Entladung bewirken.

Im Vergleich zu einem Widerstand, insbesondere Bremswiderstand, welcher der Umgebungsluft ausgesetzt ist, ist mittels des Strahlers somit eine viel schnellere Entladung des Energiespeichers erreichbar. Dazu unterstützt hierbei die Kennlinie des Strahlers, welche den Widerstand als Funktion der am Strahler anliegenden Spannung darstellt. Denn die Kennlinie zeigt ein stark ausgeprägtes PTC-Verhalten. Insbesondere nimmt die differentielle Zunahme des Widerstands mit zunehmender Spannung streng monoton ab.

Bei einer vorteilhaften Ausgestaltung ist die Röhre für einen Bereich des Infrarot-Wellenlängenbereiches transparent ausgeführt. Von Vorteil ist dabei, dass die Strahlung effizient an die Umgebung abführbar ist.

Bei einer vorteilhaften Ausgestaltung ist die Röhre aus Glas ausgeführt. Von Vorteil ist dabei, dass Glas für die Infrarotstrahlung transparent ist und somit ein effizientes Abstrahlen ermöglicht ist.

**Erfindungsgemäß** weist das System ein Elektrogerät auf, welches ein Deckelteil aufweist, das drehbar gelagert ist an einem Gehäuseteil des Elektrogeräts,
wobei der Strahler im Deckelteil aufgenommen ist. Von Vorteil ist dabei, dass der Strahler an der Innenseite des Deckelteils anordenbar ist und somit durch Drehung des Deckelteils, insbesondere Auflegen des Deckelteils auf das Gehäuseteil in einem Innenraum geschützt anordenbar ist. Somit ist der Strahler geschützt transportierbar. Die Röhren des Strahlers und ein die Röhren teilweise umgebender Spiegel, insbesondere Metallspiegel, werden also während des Transports keiner Gefahr ausgesetzt. Zum Betrieb wird das Deckelteil aufgeklappt und der Strahler dabei in eine gewünschte Richtung ausgerichtet.

**Erfindungsgemäß** ist am Gehäuseteil ein drehbar gelagertes Rad vorgesehen, insbesondere wobei das UITr Rad und/oder eine mit dem Rad drehfest verbundene Radachse mittels eines Lagers drehbar gelagert ist, welches im Gehäuseteil aufgenommen ist. Von Vorteil ist dabei, dass das Elektrogerät einfach verfahrbar ist und daher zu einem Schaltschrank heranfahrbar ist, in welchem der Energiespeicher und/oder der Wechselrichter angeordnet ist oder sind.

Bei einer vorteilhaften Ausgestaltung ist am Gehäuseteil ein Griff und/oder ein Teleskopgriff angeordnet. Von Vorteil ist dabei, dass ein Bewegen des Elektrogeräts einfach ausführbar ist.

Bei einer vorteilhaften Ausgestaltung ist am Gehäuseteil ein von der Drehachse des Rades beabstandeter Standfuß am Gehäuseteil angeordnet,
insbesondere wobei der Standfuß eine Ebene, insbesondere Bodenfläche, berührt,
wobei die Ebene parallel zur Drehachse des Rades ausgerichtet ist und mit dem halben Außendurchmesser des Rades von der Drehachse des Rades beabstandet ist,
insbesondere wobei auch das Rad die Ebene berührt,
insbesondere wobei der Standfuß zwischen dem Gehäuseteil und der Ebene angeordnet ist. Von Vorteil ist dabei, dass beim Bewegen des Elektrogeräts nur eine einzige Drehachse und somit nur zwei Räder notwendig sind.

Bei einer vorteilhaften Ausgestaltung ist ein Mittel zur Erfassung eines durch den Strahler fließenden Stroms und/oder zur Erfassung der den Strahler speisenden Spannung, insbesondere der am Energiespeicher anliegenden Spannung, am Gehäuseteil angeordnet, insbesondere mit einem Mittel zur Anzeige verbunden ist, welches geeignet ist das Unterschreiten eines Schwellwertes, insbesondere an Strom und/oder Spannung, anzuzeigen. Von Vorteil ist dabei, dass bei Überschreiten von kritischen Schwellwerten eine Warnung anzeigbar ist. insbesondere ist auch eine Bestimmung des Ladezustands des Schwellwertes ermöglicht und somit eine Anzeige bei Unterschreiten eines Schwellwertes, der die Entladung des Energiespeichers anzeigt.

Bei einer vorteilhaften Ausgestaltung ist ein Schalter zum elektrischen Abtrennen des Strahlers mit einem Mittel zur Überwachung einer Temperatur des Elektrogeräts auf Überschreiten eines Temperatur-Schwellwerts, insbesondere einer kritischen Temperatur, verbunden. Von Vorteil ist dabei, dass bei unzulässig hoher Temperatur, insbesondere also Übertemperatur, ein Abschalten des Elektrogeräts ermöglicht ist.

Bei einer vorteilhaften Ausgestaltung ist der Energiespeicher über einen Schalter mit dem gleichspannungsseitigen Anschluss eines Wechselrichters verbindbar, dessen wechselspannungsseitiger Anschluss einen Elektromotor speist,
und/oder ein gleichspannungsseitiger Anschluss eines Versorgungsmoduls, insbesondere eines einen Gleichrichter umfassenden Versorgungsmoduls oder eines als Gleichrichter ausgeführten Versorgungsmoduls, ist mit dem Enegiespeicher über einen oder den Schalter verbindbar, insbesondere elektrisch parallel zum gleichspannungsseitigen Anschluss des Wechselrichters schaltbar. Von Vorteil ist dabei, dass der Energiespeicher bei generatorischem Betrieb des vom Wechselrichter gespeisten Elektromotors Energie aufnimmt und bei motorischem Betrieb und entleertem Energiespeicher vom Versorgungsmodul aus dem Wechselspannungsversorgungsnetz Energie über den Gleichrichter des Versorgungsmoduls zuführbar ist. Zum Entladen des Energiespeichers ist selbstverständlich der Schalter geöffnet und somit sowohl der gleichspannungsseitige Anschluss des Wechselrichters als auch der des Versorgungsmoduls elektrisch abgetrennt vom Energiespeicher.

Bei einer vorteilhaften Ausgestaltung ist der Elektromotor ein Drehstrommotor und die vom Wechselrichter zur Verfügung gestellte Wechselspannung ist eine Drehspannung. Von Vorteil ist dabei, dass der Elektromotor ein großes Drehmoment erzeugbar macht und im generatorischen Betrieb eine große Leistung erzeugt, die dem Energiespeicher zuführbar ist.

Bei einer vorteilhaften Ausgestaltung weist das Elektrogerät ein Mittel zur Bestimmung und Anzeige eines Maßes für den Ladezustand des Energiespeichers auf,
insbesondere wobei das Mittel mit dem Mittel zur Erfassung eines durch den Strahler fließenden Stroms und/oder zur Erfassung der den Strahler speisenden Spannung verbunden ist, insbesondere zur Bestimmung des Ladezustands aus dem erfassten Strom- und/oder Spannungsverlaufs. Von Vorteil ist dabei, dass das Elektrogerät zwar separat vom Energiespeicher mittels Rädern verfahrbar ist, aber nach dem elektrischen Verbinden mit dem Energiespeicher und darauf nachfolgendem Entladen des Energiespeichers der Ladezustand des Energiespeichers anzeigbar.

Bei einer vorteilhaften Ausgestaltung sind der Wechselrichter und der Energiespeicher jeweils in einem jeweiligen oder gemeinsamen Schaltschrank angeordnet. Von Vorteil ist dabei, dass das Elektrogerät zum Entladen des Energiespeichers nicht im Schaltschrank angeordnet ist, sondern außerhalb herantransportierbarfahrbar ist und somit die vom Elektrogerät abgestrahlte Wärme mit einer Vorzugsrichtung abstrahlbar ist, welche derart wählbar ist, dass keine Gefahr, insbesondere der Überhitzung von Anlagenteilen, ausgelöst wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

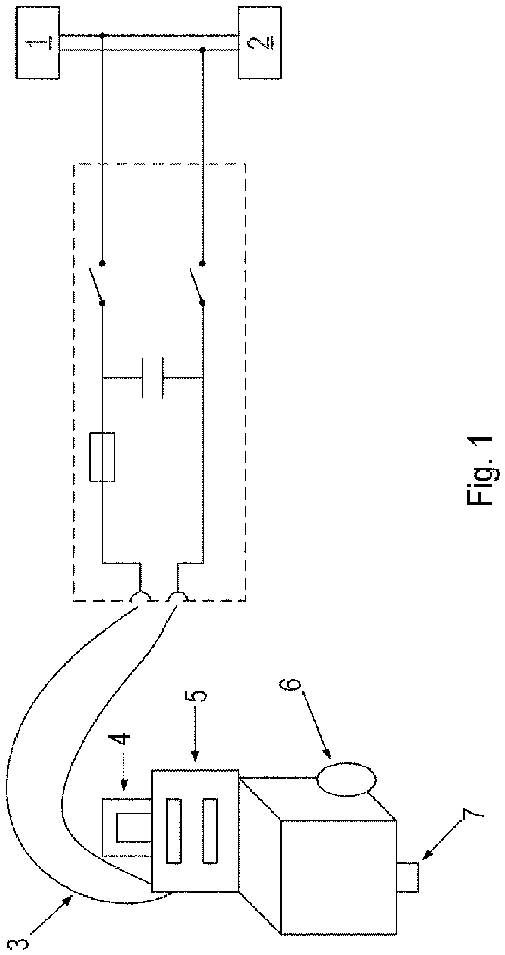

In der Figur 1 ist ein erfindungsgemäßes System schematisch skizziert.

Wie in der Figur 1 gezeigt, stellt ein von einem Wechselspannungsversorgungsnetz gespeistes Versorgungsmodul 1 eine Gleichspannung einem Antrieb zur Verfügung.

Das Versorgungsmodul 1 umfasst einen Gleichrichter, an dessen gleichspannungsseitigem Anschluss der gleichspannungsseitige Anschluss eines Wechselrichters und ein dazu parallel angeordneter Energiespeicher angeschlossen ist.

Aus dem wechselspannungsseitigen Anschluss des Wechselrichters ist ein Elektromotor versorgt.

Der Energiespeicher weist einen Doppelschichtkondensator auf. Insbesondere ist der Energiespeicher bei hohen Spannungen, beispielsweise bis zu 800 Volt oder etwa 900 Volt, betreibbar. Durch die Verwendung von Doppelschichtkondensatoren sind hohe Ladeströme und Entladeströme zulässig.

Allerdings ist beispielsweise bei Service-Einsätzen eine Entladung des Energiespeichers notwendig, da dieser noch gefährlich hohe Spannungen bereitstellen könnte, auch wenn der Antrieb abgeschaltet ist und/oder das Versorgungsmodul 1 vom Wechselspannungsversorgungsnetz abgetrennt ist.

Zur Entladung des Energiespeichers wird ein vorzugsweises auf zumindest einem Rad fahrbares Elektrogerät eingesetzt, das mittels eines Kabels 3 mit den Potentialen des Energiespeichers verbunden wird. Hierzu werden die Kabel, insbesondere deren jeweilige elektrische Leitungen, mit dem jeweiligen Anschluss des Energiespeichers verbunden. Als elektrische Leitungen des Kabels sind vorzugsweise eine Leitung für ein oberes Potential und eine dritte Leitung für ein unters Potential vorgesehen, insbesondere und ein Schutzleiter.

Vorzugsweise weist jedes der Kabel 3 eine einzige Leitung auf.

Das Elektrogerät weist einen Strahler 5 auf, dem der über die Kabel 3 geleitete Strom zugeleitet wird. Auf diese Weise ist eine große elektrische Leistung in Strahlung, insbesondere Wärmestrahlung, umwandelbar.

Im Gegensatz zu sogenannten Bremswiderständen weist der Strahler 5 einen einen elektrischen Widerstand aufweisenden Draht auf, der in einer mit Schutzgas befüllten Röhre angeordnet ist. Die Röhre ist dabei möglichst transparent für einen großen Anteil der Strahlung.

Als Halogen ist vorzugsweise ein Halogen verwendet.

Auch wenn der Draht glüht, ist mittels des Schutzgases Oxidation des Drahtes verhindert. Somit ist der Draht mit einem starken Strom beaufschlagbar, so dass der Energiespeicher schnell entladbar ist.

Vorzugsweise ist der wesentliche Anteil der durch den Strahler 5 abgestrahlten Strahlungsleistung im Infrarot-Bereich, insbesondere also Infrarot-Frequenzbereich.

Der Draht ist aus einer vorzugsweise metallischen Legierung ausgeführt.

Weiter bevorzugt ist der Strahler 5 an der Innenseite eines drehbar angeordneten Deckelteils des Elektrogeräts angeordnet. Somit ist bei Betrieb des Strahlers die Strahlung nach oben oder schräg nach oben abstrahlbar. Auf diese Weise ist vermeidbar, dass die Strahlung des Strahlers 5 die Signalelektronik und die Leistungselektronik des Wechselrichters des Antriebs 2 oder des Versorgungsmoduls 1 erhitzt und somit gefährdet.

Nach Beendigung des Betriebs ist das Deckelteil einklappbar und somit in einem geschützten Innenraum des Elektrogeräts anordenbar. Somit ist der Strahler 5 geschützt transportierbar auf dem verfahrbaren Elektrogerät und kann somit einfach und ohne besonderen Aufwand zu einem Antrieb herangefahren werden, elektrisch angeschlossen werden und den Energiespeicher entladen.

Insbesondere ist der Strahler 5 als Infrarot-Strahler ausgeführt.

Der Wechselrichter weist steuerbare Halbleiterschalter auf, welche in Halbbrücken angeordnet sind und vorzugswiese eine Drehspannung am wechselspannungsseitigen Anschluss bereitstellen, aus welchen der Elektromotor gespeist ist. Hierzu erzeugt eine Signalelektronik des Wechselrichters pulsweitenmodulierte Ansteuersignale für die steuerbaren Halbleiterschalter.

Das Elektrogerät weist einen Standfuß 7 auf, der von der Drehachse des Rades 6 beabstandet ist, so dass das Elektrogerät auf einem Boden abstellbar ist, wobei eine stabile Lage erreichbar ist und ein Wegrollen des Elektrogeräts verhinderbar ist.

Das Elektrogerät weist an seinem Deckelteil einen Griff 4 auf, der ein einfaches Ziehen oder Schieben des mittels des Rades 6 ermöglicht.

Bei weiteren erfindungsgemäßen Ausführungsbeispielen wird statt des Griffs 4 ein Teleskopgriff am Elektrogerät angeordnet, insbesondere an demjenigen Gehäuseteil des Elektrogeräts, an welchem das Deckelteil drehbar gelagert ist. Somit ist eine einfache und sichere Handhabung des Elektrogeräts erreichbar. Außerdem ist auch ein Thermoschalter innerhalb des Gehäuseteils anordenbar, so dass bei Überschreiten eines Temperaturschwellwerts ein Abschalten, also elektrisches Trennen, des Strahlers ausführbar ist.

Außerdem ist auch ein Not-Aus-Schalter am Elektrogerät anbringbar.

Bei weiteren erfindungsgemäßen Ausführungsbeispielen wird im Elektrogerät der dem Strahler 5 zugeführte Strom erfasst und/oder die den Strahler 5 speisende Spannung. Aus dem zeitlichen Verlauf dieser erfassten Strom- und/oder Spannungswerte wird ein Maß für den Ladezustand des Energiespeichers bestimmt, also die im Energiespeicher gespeicherte Energie. Dieses Maß und/oder das Unterschreiten eines Schwellwertes durch das Maß ist mittels eines am Elektrogerät angeordneten Anzeigemittels optisch und/oder akustisch anzeigbar. Auf diese Weise ist das Ende des Entladevorgangs signalisierbar.

Dabei ist entweder die Nennkapazität des Energiespeichers als Parameter hinterlegt in einem Speicher des Elektrogeräts oder das Elektrogerät hat keinerlei Information über die Kapazität des Energiespeichers. Im letztgenannten Fall wird aus dem dem Strahler 5 zugeleiteten und erfassten Strom sowie aus der am Strahler anliegenden Spannung die momentane, dem Strahler 5 zugeführte elektrische Leistung bestimmt. Aus dem zeitlichen Verlauf dieser Leistung ist erkennbar, dass diese Leistung abnimmt, wobei aus der Änderung der Leistung pro Zeiteinheit und der aktuell an den Strahler 5 abgeführten Leistung eine Zeitspanne abschätzbar ist, nach welcher der Energiespeicher nur noch einen Bruchteil der aktuell abgeführten Leistung abgeben wird. Somit ist mittels der Zeitspanne oder dem Bruchteil ein Zeitpunkt bestimmbar, an welchem der Energiespeicher als entladen gilt und dies entsprechend mittels des Anzeigemittels des Elektrogeräts anzeigbar ist.

Das Elektrogerät weist einen Schalter auf, mit dem der Strahler 5 elektrisch abtrennbar ist.

Das Elektrogerät wird mittels des Kabels 3 mit dem Energiespeicher, insbesondere Kondensator, wie Doppelschichtkondensator, insbesondere Ultracap, verbunden, nachdem der Energiespeicher vom gleichspannungsseitigen Anschluss des Wechselrichters des Antriebs 2 mittels steuerbarer Schalter, insbesondere Schütze, abgetrennt worden ist.

### Bezugszeichenliste

1 Versorgungsmodul, insbesondere umfassend Gleichrichter
2 Antrieb, insbesondere umfassend von einem Wechselrichter gespeister Elektromotor
3 Kabel
4 Griff
5 Strahler
6 Rad
7 Standfuß

## Patentansprüche

1. System mit Energiespeicher und Strahler (5),
**wobei** der Energiespeicher mit dem Strahler elektrisch lösbar, insbesondere mittels Steckverbindung oder Klemmverbindung, verbunden ist und den Strahler elektrisch speist,
**dadurch gekennzeichnet, dass**
**das System ein Elektrogerät aufweist, welches ein Deckelteil aufweist, das drehbar gelagert ist an einem Gehäuseteil des Elektrogeräts,**
**wobei der Strahler im Deckelteil aufgenommen ist,**
**wobei am Gehäuseteil ein drehbar gelagertes Rad** (6) zum Verfahren des Elektrogeräts **vorgesehen ist.**

2. System **nach Anspruch 1,**
**dadurch gekennzeichnet, dass**
der Strahler ein IR-Strahler, insbesondere also Infrarotstrahler, ist.

3. System nach einem der vorangegangenen Ansprüche,
**dadurch gekennzeichnet, dass**
der Energiespeicher einen Doppelschichtkondensator aufweist oder als Doppelschichtkondensatoranordnung ausgeführt ist.

4. System nach einem der vorangegangenen Ansprüche, **dadurch gekennzeichnet, dass**
der Strahler einen in einer mit Schutzgas, insbesondere mit einem Halogen, befüllten Röhre angeordneten Draht aufweist,
insbesondere wobei der Draht mit einem Strom, insbesondere mit einem wesentlichen Anteil des vom Energiespeichers gelieferten Stroms, beaufschlagt ist, insbesondere wird.

5. System nach einem der vorangegangenen Ansprüche,
**dadurch gekennzeichnet, dass**
die Röhre für einen Bereich des Infrarot-Wellenlängenbereiches transparent ausgeführt ist und/oder dass
die Röhre aus Glas ausgeführt ist.

6. System nach einem der vorangegangenen Ansprüche,
**dadurch gekennzeichnet, dass**
das **Rad und/oder eine mit dem Rad drehfest verbundene Radachse mittels eines Lagers drehbar gelagert ist, welches im Gehäuseteil aufgenommen ist.**

7. System nach einem der vorangegangenen Ansprüche,
**dadurch gekennzeichnet, dass**
am Gehäuseteil ein Griff (4) und/oder ein Teleskopgriff angeordnet ist.

8. System nach einem der vorangegangenen Ansprüche,
**dadurch gekennzeichnet, dass**
am Gehäuseteil ein von der Drehachse des Rades beabstandeter Standfuß (7) am Gehäuseteil angeordnet ist,
insbesondere wobei der Standfuß eine Ebene, insbesondere Bodenfläche, berührt,
wobei die Ebene parallel zur Drehachse des Rades ausgerichtet ist und mit dem halben Außendurchmesser des Rades von der Drehachse des Rades beabstandet ist, insbesondere wobei auch das Rad die Eben berührt,
insbesondere wobei der Standfuß zwischen dem Gehäuseteil und der Ebene angeordnet ist.

9. System nach einem der vorangegangenen Ansprüche,
**dadurch gekennzeichnet, dass**
ein Mittel zur Erfassung eines durch den Strahler fließenden Stroms und/oder zur Erfassung der den Strahler speisenden Spannung, insbesondere der am Energiespeicher anliegenden Spannung, am Gehäuseteil angeordnet ist, insbesondere mit einem Mittel zur Anzeige verbunden ist, welches geeignet ist das Unterschreiten eines Schwellwertes, insbesondere an Strom und/oder Spannung, anzuzeigen.

10. System nach einem der vorangegangenen Ansprüche,
**dadurch gekennzeichnet, dass**
ein Schalter zum elektrischen Abtrennen des Strahlers mit einem Mittel zur Überwachung einer Temperatur des Elektrogeräts auf Überschreiten eines Temperatur-Schwellwerts, insbesondere einer kritischen Temperatur, verbunden ist.

11. System nach einem der vorangegangenen Ansprüche,
**dadurch gekennzeichnet, dass**
der Energiespeicher über zumindest einen steuerbaren Schalter, insbesondere Schütz, mit dem gleichspannungsseitigen Anschluss eines Wechselrichters verbunden ist, dessen wechselspannungsseitiger Anschluss einen Elektromotor speist,
insbesondere wobei der steuerbare Schalter in einem den Energiespeicher umgebenden Gehäuse angeordnet ist,
und/oder wobei ein gleichspannungsseitiger Anschluss eines Versorgungsmoduls, insbesondere eines einen Gleichrichter umfassenden Versorgungsmoduls oder eines als Gleichrichter ausgeführten Versorgungsmoduls, mit dem Enegiespeicher verbunden ist, insbesondere elektrisch parallel zum gleichspannungsseitigen Anschluss des Wechselrichters geschaltet ist.

12. System nach **Anspruch 11,**
**dadurch gekennzeichnet, dass**
der Elektromotor ein Drehstrommotor ist und die vom Wechselrichter zur Verfügung gestellte Wechselspannung eine Drehspannung ist,
und/oder dass
das Elektrogerät ein Mittel zur Bestimmung und Anzeige eines Maßes für den Ladezustand des Energiespeichers aufweist,
insbesondere wobei das Mittel mit dem Mittel zur Erfassung eines durch den Strahler fließenden Stroms und/oder zur Erfassung der den Strahler speisenden Spannung verbunden ist, insbesondere zur Bestimmung des Ladezustands aus dem erfassten Strom- und/oder Spannungsverlaufs,
und/oder dass
der Wechselrichter und der Energiespeicher jeweils in einem jeweiligen oder gemeinsamen Schaltschrank angeordnet sind.

13. Verfahren zum Betreiben eines Systems nach einem der **Ansprüche 11 oder 12, dadurch gekennzeichnet, dass**
in einem ersten Verfahrensschritt der Energiespeicher mittels des steuerbaren Schalters vom gleichspannungsseitigen Anschluss des Wechselrichters abgetrennt wird,
in einem zeitlich danach folgenden zweiten Verfahrensschritt der Strahler mit dem Energiespeicher mittels eines Kabels verbunden wird und durch Schließen eines im Elektrogerät angeordneten Schalters der Strahler mit dem Energiespeicher elektrisch verbunden wird, insbesondere zum Entladen des Energiespeichers.

## Claims

1. System comprising an energy store and an emitter (5),
wherein the energy store is electrically detachably connected to the emitter, in particular by means of a plug-in connection or a clamping connection, and electrically powers the emitter,
**characterized in that**
the system comprises an electrical device, which has a lid part that is rotatably mounted on a housing part of the electrical device,
wherein the emitter is accommodated in the lid part,
wherein a rotatably mounted wheel (6) is provided on the housing part in order to move the electrical device.

2. System according to claim 1,
**characterized in that**
the emitter is an IR emitter, i.e. in particular an infrared emitter.

3. System according to any one of the preceding claims, **characterized in that**
the energy store comprises a double-layer capacitor or is designed as a double-layer capacitor arrangement.

4. System according to any one of the preceding claims, **characterized in that**
the emitter comprises a wire arranged in a tube filled with protective gas, in particular with a halogen,
in particular wherein a current, in particular a substantial proportion of the current delivered by the energy store, is applied, in particular will be applied, to the wire.

5. System according to any one of the preceding claims, **characterized in that**
the tube is designed to be transparent to a region of the infrared wavelength range,
and/or **in that**
the tube is made of glass.

6. System according to any one of the preceding claims, **characterized in that**
the wheel and/or a wheel axle rotatably rigidly connected to the wheel is rotatably mounted by means of a bearing, which is accommodated in the housing part.

7. System according to any one of the preceding claims, **characterized in that**
a handle (4) and/or a telescopic handle is arranged on the housing part.

8. System according to any one of the preceding claims, **characterized in that**
a foot (7) is arranged on the housing part at a distance from the axis of rotation of the wheel,
in particular wherein the foot contacts a plane, in particular a floor surface,
wherein the plane is oriented parallel to the axis of rotation of the wheel and is arranged at a distance of half of the external diameter of the wheel from the axis of rotation of the wheel,
in particular wherein the wheel also contacts the plane,
in particular wherein the foot is arranged between the housing part and the plane.

9. System according to any one of the preceding claims, **characterized in that**
a means for detecting a current flowing through the emitter and/or for detecting the voltage powering the emitter, in particular the voltage applied to the energy store, is arranged on the housing part, in particular is connected to an indicator means which is suitable for indicating when there is a drop below a threshold, in particular with regard to current and/or voltage.

10. System according to any one of the preceding claims, **characterized in that**
a switch for electrically disconnecting the emitter is connected to a means for monitoring a temperature of the electrical device with regard to exceeding a temperature threshold, in particular a critical temperature.

11. System according to any one of the preceding claims, **characterized in that**
the energy store is connected via at least one controllable switch, in particular a contactor, to the DC voltage terminal of an inverter, the AC voltage terminal of which powers an electric motor,
in particular wherein the controllable switch is arranged in a housing surrounding the energy store,
and/or wherein a DC voltage terminal of a power supply module, in particular a power supply module comprising a rectifier or a power supply module designed as a rectifier, is connected to the energy store, in particular is electrically switched in parallel with the DC voltage terminal of the inverter.

12. System according to claim 11,
**characterized in that**
the electric motor is a three-phase motor and the AC voltage provided by the inverter is a three-phase voltage,
and/or **in that**
the electrical device comprises a means for determining and indicating a measure of the state of charge of the energy store, in particular wherein the means is connected to the means for detecting a current flowing through the emitter and/or for detecting the voltage powering the emitter, in particular in order to determine the state of charge on the basis of the detected current curve and/or voltage curve,
and/or **in that**
the inverter and the energy store are each arranged in a respective or shared control cabinet.

13. Method for operating a system according to any one of claims 11 or 12,
**characterized in that**
in a first method step the energy store is disconnected from the DC voltage terminal of the inverter by means of the controllable switch,
in a second method step, which temporally follows the first, the emitter is connected to the energy store by means of a cable, and by closing a switch arranged in the electrical device the emitter is electrically connected to the energy store, in particular in order to discharge the energy store.

## Revendications

1. Système comprenant un accumulateur d'énergie et un émetteur (5), l'accumulateur d'énergie étant relié électriquement de manière amovible à l'émetteur, en particulier au moyen d'une liaison par enfichage ou d'une liaison par serrage, et alimentant l'émetteur,
**caractérisé en ce que**
le système présente un appareil électrique qui présente une partie couvercle montée rotative au niveau d'une partie boîtier de l'appareil électrique,
l'émetteur étant logé dans la partie couvercle,
une roue (6) montée rotative et permettant de déplacer l'appareil électrique étant fournie au niveau de la partie boîtier.

2. Système selon la revendication 1,
**caractérisé en ce que**
l'émetteur est un émetteur IR, en particulier un émetteur infrarouge.

3. Système selon l'une quelconque des revendications précédentes,
**caractérisé en ce que**
l'accumulateur d'énergie présente un condensateur à double couche ou est réalisé sous la forme d'un ensemble formant condensateur à double couche.

4. Système selon l'une quelconque des revendications précédentes,
**caractérisé en ce que**
l'émetteur présente un fil agencé dans un tube rempli avec du gaz protecteur, en particulier avec un halogène,
en particulier le fil étant, en particulier devant être, alimenté avec un courant, en particulier avec une partie conséquente du courant fourni par l'accumulateur d'énergie.

5. Système selon l'une quelconque des revendications précédentes,
**caractérisé en ce que**
le tube est transparent pour une plage du domaine des longueurs d'onde infrarouge et/ou **en ce que**
le tube est réalisé en verre.

6. Système selon l'une quelconque des revendications précédentes,
**caractérisé en ce que**
la roue et/ou un axe de roue relié à la roue de manière solidaire en rotation est monté(e) de manière rotative au moyen d'un palier qui est logé dans la partie boîtier.

7. Système selon l'une quelconque des revendications précédentes,
**caractérisé en ce que**
une poignée (4) et/ou une poignée télescopique est/sont agencée(s) au niveau de la partie boîtier.

8. Système selon l'une quelconque des revendications précédentes,
**caractérisé en ce que**
un pied de support (7) espacé par rapport à l'axe de rotation de la roue est agencé au niveau de la partie boîtier,
le pied de support étant en particulier en contact avec un plan, en particulier avec la surface du sol,
le plan étant orienté parallèlement à l'axe de rotation de la roue et étant espacé par rapport à l'axe de rotation de la roue d'une distance correspondant à la moitié du diamètre extérieur de la roue,
la roue étant en particulier également en contact avec le plan,
le pied de support étant en particulier agencé entre la partie boîtier et le plan.

9. Système selon l'une quelconque des revendications précédentes,
**caractérisé en ce que**
un moyen permettant de détecter un courant circulant à travers l'émetteur et/ou permettant de détecter la tension alimentant l'émetteur, en particulier la tension appliquée à l'accumulateur d'énergie, est agencé au niveau de la partie boîtier, en particulier est relié à un moyen d'affichage approprié pour indiquer le passage en dessous d'une valeur de seuil, en particulier en ce qui concerne le courant et/ou la tension.

10. Système selon l'une quelconque des revendications précédentes,
**caractérisé en ce que**
un interrupteur permettant de déconnecter électriquement l'émetteur est relié à un moyen permettant de surveiller la température de l'appareil électrique en cas de dépassement d'une valeur de seuil de température, en particulier d'une température critique.

11. Système selon l'une quelconque des revendications précédentes,
**caractérisé en ce que**
l'accumulateur d'énergie est relié par l'intermédiaire d'au moins un interrupteur commandable, en particulier d'une protection, à la borne située côté tension continue d'un onduleur dont la borne située côté tension alternative alimente un moteur électrique,
l'interrupteur commandable étant en particulier agencé dans un boîtier entourant l'accumulateur d'énergie,
et/ou une borne située coté tension continue d'un module d'alimentation, en particulier d'un module d'alimentation comprenant un redresseur ou d'un module d'alimentation conçu comme un redresseur, est relié à l'accumulateur d'énergie, en particulier est connecté électriquement en parallèle à la borne située coté tension continue de l'onduleur.

12. Système selon la revendication 11,
**caractérisé en ce que**
le moteur électrique est un moteur triphasé et la tension alternative fournie par l'onduleur est une tension triphasée,
et/ou **en ce que**
l'appareil électrique présente un moyen permettant de déterminer et d'afficher une mesure de l'état de charge de l'accumulateur d'énergie,
ledit moyen étant en particulier relié au moyen permettant de détecter un courant circulant à travers l'émetteur et/ou permettant de détecter la tension alimentant l'émetteur, en particulier permettant de déterminer l'état de charge à partir de la courbe de courant et/ou de tension détectée,
et/ou **en ce que**
l'onduleur et l'accumulateur d'énergie sont agencés respectivement dans une armoire électrique respective ou commune.

13. Procédé de fonctionnement d'un système selon l'une quelconque des revendications 11 ou 12, **caractérisé en ce que**
dans une première étape de procédé, l'accumulateur d'énergie est déconnecté de la borne située côté tension continue de l'onduleur au moyen de l'interrupteur commandable,
dans une deuxième étape de procédé chronologiquement postérieure, l'émetteur est relié à l'accumulateur d'énergie au moyen d'un câble et l'émetteur est relié électriquement à l'accumulateur d'énergie grâce à la fermeture d'un interrupteur agencé dans l'appareil électrique, en particulier afin de décharger l'accumulateur d'énergie.
